# EUROPEAN PATENT APPLICATION

(11) **EP 1 262 237 A2**
(43) Date of publication of application: **04.12.2002**
(21) Application number: 02009733.3
(22) Date of filing: 30.04.2002
(51) Int. Cl.: B01L 3/02, G01N 35/10

(54) **A diagnostic pipette assembly including apparatus for automated aspiration**

(30) Priority: 03.05.2001 US 849731
(71) Applicant: Hitachi Chemical Diagnostics, Inc., Mountain View, CA 94043 (US)
(72) Inventor: Itaya, Hideki, San Jose, California 95134 (US); Hool, Jason Dominic, San Jose, California 95134 (US); Javier, Urena, San Jose, California 95134 (US); Spears, Fredrick, San Jose, California 95134 (US); Ohno, Osamu, San Jose, California 95134 (US); Maruoka, Kantaro, San Jose, California 95134 (US)
(74) Representative: van Walstijn, Bartholomeus Gerard G.

(57) **Abstract**

Disclosed herein is a diagnostic vessel known as a pipette. The pipette includes a main pipette housing (12) having a hollow interior defining a first chamber (24) and a proximal end (26) and an open distal end (28). The pipette includes a pipette tip assembly (14) connectable to the main pipette housing (12) having a hollow interior defining a second chamber (34), the pipette tip hollow interior having open proximal (30) and distal ends (32). The pipette tip (14) includes a plunger (42) within the second chamber (34). Additionally, the pipette tip assembly includes structure (40,41,46) for normally urging the plunger (42) to a first position such that the plunger closes the distal end (32) of the pipette tip (14). The structure (40,41,46) for normally urging the plunger (42) to a first position also allows the plunger (42) to be urged to a second position, wherein the plunger (42) opens the distal end (32) and allows fluid communication from the distal end (32) of the pipette tip through the second chamber and into the first chamber.

## Description

This invention relates generally to medical instruments and devices and methods for their use in diagnostic analysis of biological and other liquid specimens and more particularly, this invention relates to instruments and devices and methods for their use in an automated multiple simultaneous diagnostic analysis, even more particularly this invention relates to diagnostic vessels known as pipettes having structure for facilitating the use of the pipette in accordance with this invention in automated diagnostic environments and even more particularly to methods and apparatus for drawn liquid sample from a sample cup into a pipette directly in the automated environment.

### BACKGROUND ART

The testing of biological liquid samples has been ongoing for many years. As time passes, it becomes increasingly important to obtain faster and more accurate results using greater economical measures. There are many patent disclosures and other public documents that discuss various aspects of automating such procedures. The recent patent to Miyake et al, US 6,197,255 B1 discloses an example of side-by-side carousels which includes a liquid delivery device for removing the sample from one of the side-by-side carousels and transferring it to the other side-by-side carousel. The patent to Sasaki et al, 6,193,933 also disclose similar side-by-side carousels in an automatic analysis apparatus. Similar side-by-side carousels are disclosed in Mitsumaki et al, US 5,320,966 and Wakatake, US 5,183,638. All of these devices are characterized by side-by-side carousels and a transfer device which moves the sample from one carousel to the other.

Others have disclosed rotating platforms that are offset, such as Minekane, US 4,906,433. Here, side-by-side carousels are combined with an offset platform for liquid analysis. The offset platform contains reagents and transfers the from one carousel to the offset platform through a third mechanism or transfer mechanism. A similar mechanism is used by Berglund, US 4,459,265.

However, none of these disclosures recognize that having to maneuver the liquid sample through a third mechanism, namely a transfer mechanism, poses serious risks and inefficiencies. For example, contamination of the entire carousel of samples can result if the transfer mechanism is not keep perfectly clean. Thus, one must include a separate step for thoroughly cleansing the transfer mechanism as well as separate structure on the instrument itself. Additionally, the risk of failure is always present. Should the cleansing mechanism fail even slightly the results in the entire carousel are in jeopardy, not simply one sample.

Clearly, the cleansing step requires time and additional equipment. This drives up the cost of the instrument as well as making the instrument less reliable and less economical as well as less efficient. Additionally, the additional equipment required by cleansing means that the instrument takes up more space. The greater the space taken up by the equipment, the greater the need for space. With the price of office rents and lease already extremely high in many areas, this means that such instruments are even more expensive when their true costs are fully appreciated.

There are even those disclosures directed to an improved pipette, namely, Kim 5,45,268 which discloses a liquid displacement pipette. The device disclosed in '268 is a manual pipette including a double-plunger, a main spring coil and a syringe barrel. This disclosure is directed at delivering the liquid sample completely without leaving any residual liquid in the syringe barrel.

Magnussen, Jr. et al, US 4,616,514 disclose a manual pipette having a removable tip. This pipette includes a controllable velocity governor for regulating the rate of plunger return in drawing fluid into the tip. This pipette discloses the use of spring adjacent the tip. The spring is used for removing the tip.

Jakubowicz et al, US 4,593,837 disclose another removable tip pipette tips. The pipette is used for controlling the volume of liquid sample dispensed by a variable volume pipette using multiple pistons, springs, and vent passages.

Lee, US 4,016,765 discloses a pipette controller having a piston with the ability for graduate reading and presetting the volume of liquid to be pipetted and a hand control for natural drainage. The pipette of this disclosure is used to prevent quick penetration of ambient temperature or an operator's body temperature, such that convenient operation and control of the pipetting are obtained.

None of these claimed improvements to pipetting disclose or even suggest a pipetting structure for use in an automated overlapping architecture. What is needed is such a pipetting structure that will be easily adaptable into such an architecture and fit compatibly in an automated environment.

### DISCLOSURE OF THE INVENTION

It is an object of this invention to provide a pipetting apparatus having structure suitable for use in an overlapping automated architecture.

It is an additional object of this invention to provide such a diagnostic vessel, also known as a pipette having structure suitable for easily obtaining sample from a sample cup in an automated environment.

It is an additional object of this invention to provide a pipette assembly including a first and a second chamber, a tip and a one way valve to allow fluid to flow through the distal end and the pipette when open, and to prevent fluid from leaking out of the pipette when closed.

In accordance with the above objects and those that will be mentioned and will become apparent below, the pipette apparatus in accordance with this invention is a pipette comprising:
a main pipette housing having a hollow interior defining a first chamber and a proximal end and an open distal end; and
a pipette tip assembly connectable to the main pipette housing having a hollow interior defining a second chamber, the pipette tip hollow interior having open proximal and distal ends and the first and second chambers in fluid communication and the pipette tip including:
   a plunger within the second chamber, and
   structure for normally urging the plunger to a first position wherein the plunger closes the distal end of the pipette tip and allowing for the plunger to be urged to a second position wherein the plunger opens the distal end and allows fluid communication from the distal end of the pipette tip through the second chamber and into the first chamber.

In an exemplary embodiment of the pipette assembly, the structure for normally urging the plunger to a first position comprises a one-way valve which is normally urged closed preventing fluid communication between the pipette tip distal end and the first and second chambers and being urgabie to as second position allowing for such communication.

In an additional exemplary embodiment, the pipette assembly includes the structure for normally urging the plunger to a first position being a spring in the second chamber.

In an additional exemplary embodiment, the pipette assembly includes the plunger having a first post and a second post and an enlarged plunger body between the posts, the plunger body is sized and shaped to close off the distal end of the pipette tip. Additionally, the plunger body and the distal end of the pipette have mating abutment surfaces. And in another exemplary embodiment, the mating abutment surfaces are tapered to promote a fluid tight seal.

In an additionally exemplary embodiment of the pipette assembly in accordance with this invention, the main housing is force fit into the pipette tip. The pipette tip and main housing each include mating abutment surfaces to accommodate the force fit and to promote a sealing connection between the pipette main housing and the pipette tip. In an additional embodiment, the mating abutment surfaces are tapered to promote a fluid tight seal.

It is an advantage of this invention to a provide a pipette assembly which easily fits into an automated environment and allows the automated process to use the pipette assembly in accordance with this invention such that liquid sample can be transferred directly and automatically from the sample cup to the pipette assembly for analysis and diagnosis.

### BRIEF DESCRIPTION OF THE DRAWINGS

For a further understanding of the objects and advantages of the present invention, reference should be had to the following detailed description, taken in conjunction with the accompanying drawing, in which like parts are given like reference numerals and wherein:
Fig. 1 is a perspective view of a diagnostic instrument for which the pipette having apparatus for automation in accordance with this invention is adapted for use.
Fig. 2 is a top plan view of the diagnostic instrument of Fig. 1 for use with the pipette in accordance with this invention.
Fig. 3 is an enlarged perspective view of the pipette in accordance with the present invention with the pipette tip in accordance with this invention shown in enlarged exploded view.
Figs. 4 - 7 illustrate, in partial perspective view, the operation of aspirating liquid sample from the sample tube into the pipette.
   in accordance with this invention.
Figs. 8 - 11 are cross-sectional views of the operation of the pipette in accordance with this invention, aspirating liquid sample from the sample cup into the pipette assembly.

### DETAILED DESCRIPTION OF THE INVENTION

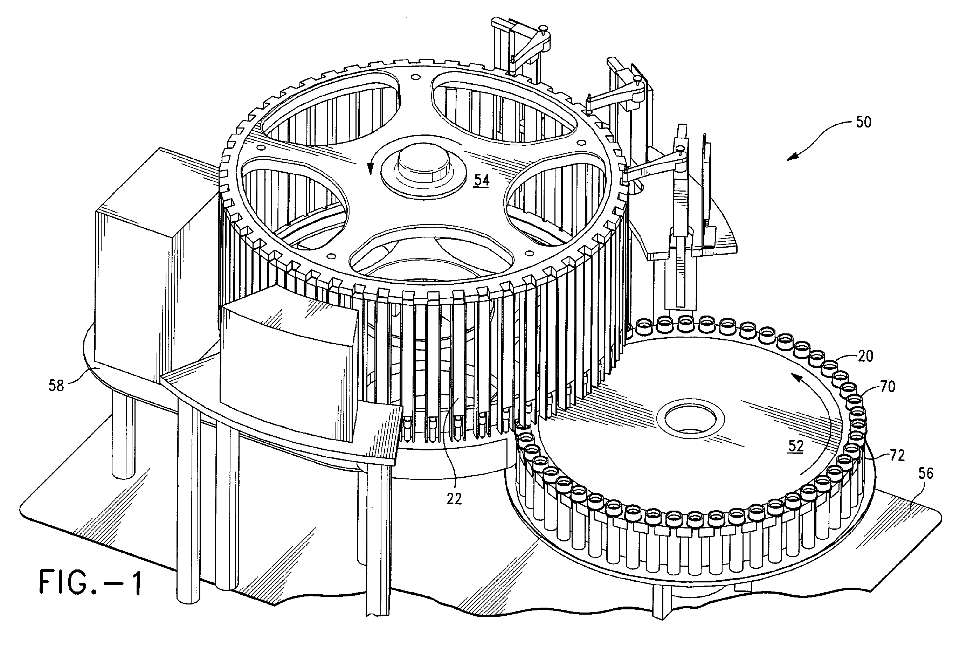

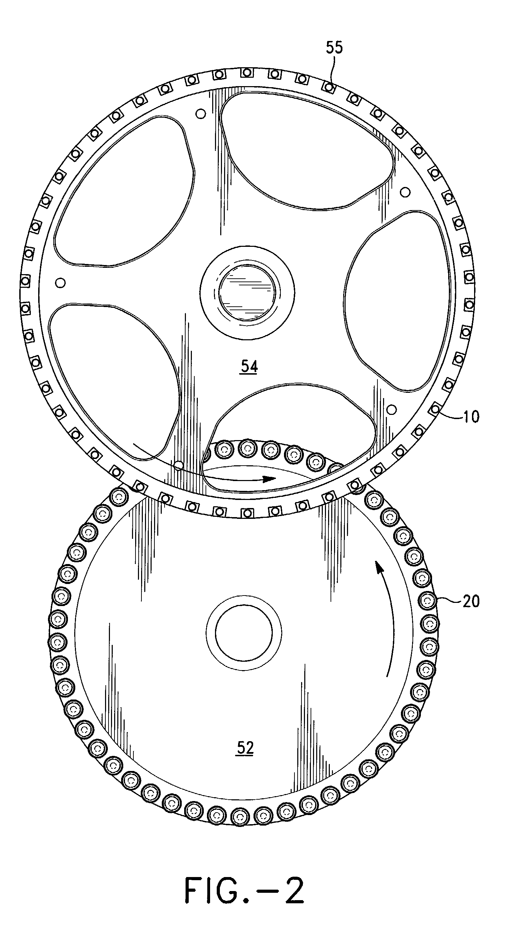

The invention will now be described with respect to the drawing and particularly to Fig. 1, which illustrates an exemplary embodiment of the invention shown generally by the numeral 10, a pipette assembly having apparatus for automated aspiration. The pipette 10 is shown in Figs. 1 and 2 in use with an overlapping diagnostic instrument shown generally by the numeral 50.

The diagnostic instrument 50 includes a first carousel 52 and a second carousel 54. The first carousel 52 is mounted on a platform 56 (shown partially in Fig. 1) and rotates in the direction shown by the arrow in Fig. 1. The first carousel defines a sample carousel and second carousel defines a pipette carousel 54. The second carousel 54 is mounted on a second platform 58 and similarly rotates in the direction shown by the arrow in Fig. 1. In the exemplary embodiment shown in Fig. 2, the carousels 52 and 54, respectively rotate independently and in the same direction. The carousels 52 and 54 rotate counter clockwise. It has been found through experimentation that such rotation of the carousels 52 and 54 in the same direction facilitates the matching of the pipette with its corresponding sample tube.

The first and second carousels, 52 and 54 respectively are found in different planes. In the exemplary embodiment shown in Figs. 1 and 2, the second carousel 54 is elevated over the first carousel 52 because platform 58 is elevated as compared with platform 56. Additionally, the carousels 52 and 54, respectively have at least one point of intersection such that the carousels 52 and 54, respectively defining an overlapping architecture. As will be appreciated from the description below and with reference to the drawing, this enables direct transfer of the sample from a sample tube into the pipette 10 located on the second carousel 54. The point or area of intersection is defined as a transfer zone.

As shown in Figs. 1 and 2, the carousel 52 has the ability to carry a plurality of sample tubes 20. In fact, the carousel 52 has a carrying capacity of 50. It will be appreciated that larger or smaller carousels can be used within the spirit and scope of this invention and typically carousel capacity is in the range of between 30 and 120. The sample tubes 20 in an exemplary embodiment are 170 mm in height and approximately 18 mm in diameter and are made from an engineering plastic. It will be appreciated that other materials and configurations are within the spirit and scope of the invention herein and for example, the sample tubes 20 could be made from glass.

The sample tube 20 is sized and shaped to compatibly and slidably connect with the first carousel 52. The first carousel 52, as does the second carousel 54, includes a plurality of slots for holding its respect sample tube 20 and pipette 10. As will be appreciated by those skilled in the art, various techniques are used to hold the sample tube 20 in place for identification. A commonly assigned patent application filed simultaneously with the instant patent application discloses anti-rotation structure on the sample tube 20 in combination with the first carousel 52 for accomplishing the purposes of the instant invention.

In an exemplary embodiment, the diagnostic procedure to be performed by the diagnostic instrument 50 is an immunoassay to determine an individual's sensitivity to certain allergens. In this case, the sample comprises an individual's blood serum, which is loaded into the sample tube 20. The outer surface of the sample tube 20 has unique identifying indicia so that each individual's serum is unique to that person and only that person. No other sample or sample tube 20 would have the matching identifying indicia. in an exemplary embodiment the unique identifying indicia is in the form of bar code readable information such that a bar code reader (not shown) can easily identify a particular individual's sample tube as long as there has been insignificant or no rotation of the sample tube 20.

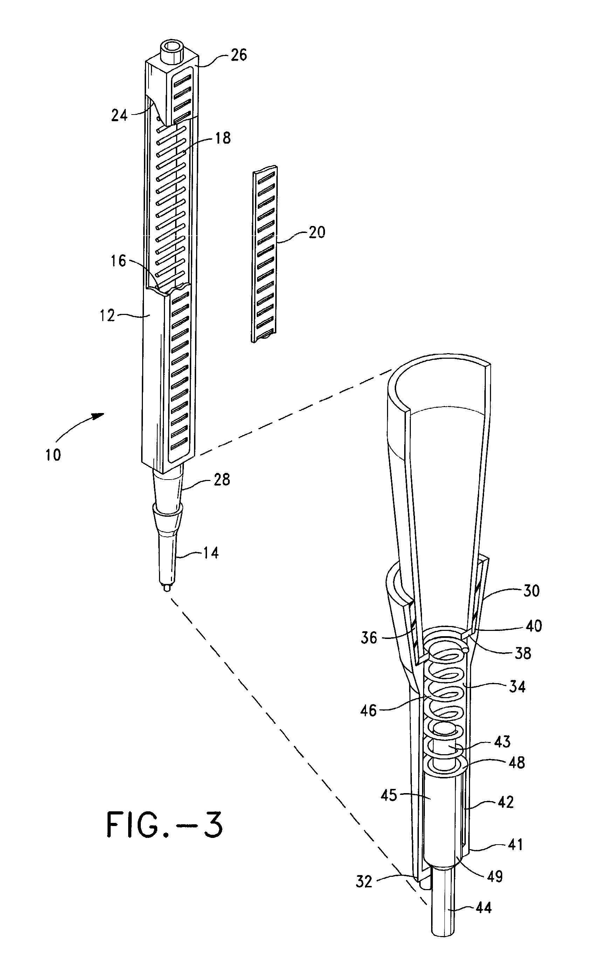

The second carousel 16 has a like capacity and carries a matching pipette, known as pipette 10. Thus, for each sample tube 20 that is carried by the first carousel 52, a corresponding pipette 10 is carried by the second carousel 54. Each of the sample tube 20 and the pipette 10 has machine readable indicia on an outside surface. An optical reader (not shown) for each of the carousels 52 and 54, respectively matches the tube 20 to the corresponding pipette 10 by rotating respective carousels to the transfer zone. Sample may then be extracted from the sample tube 20 directly into the pipette 10 as will be explained in detail with regard to Figs. 3 - 11.

As shown particularly in Figs. 1 - 3, the pipette 10 has a compatible size and shape to be loaded into the second carousel 54 by sliding the pipette 10 into a slot 55 on the second carousel 54. With particular reference to Fig. 3, there is shown the pipette 10 in accordance with this invention. The pipette 10 includes a main pipette housing 12 and a pipette tip 14.

The main pipette housing 12 has a hollow interior 16. Set inside the hollow interior 16 are a plurality of threads 18. Each of the threads 18 is coated with an allergen or group of allergens. In an exemplary embodiment the threads are a high molecular weight polysaccharide or cotton. As will appreciated by those skilled in the art, and as described in US Patent 4,567,149, each of the allergens and groups of allergens as represented by each thread, can be simultaneously tested in one pipette. A cover 22 covers the hollow interior 16 and is permanently secured to the main housing 14 by various means, including sonically welding the cover 22 to the housing 14.

The hollow interior 16 defines a first chamber 24. The first chamber 24 has a proximal end 26 and a distal end 28. The distal end 28 taper down and is force fit into the tip 14. The tip 14 and the distal end 28 being sized and shaped to matingly force fit with one another.

It will be appreciated that other means of connecting the main pipette housing 12 to the pipette tip 14 are within the spirit and scope of the instant invention. Particularly, the two elements 12 and 14 may be sonically welded or glued together, either in addition to the force fit or in combination therewith. Other exemplary embodiments of the joining of the two elements are within the spirit and scope of the instant invention.

The pipette tip 14 has a proximal end 30 and a distal end 32. The pipette tip 14 includes a valve for allowing fluid to flow in and/or out of the pipette 10 upon the application of pressure against the tip by a solid surface, such as the bottom of a sample cup as will be appreciated more fully below.

The tip 14 has a hollow interior defining a second chamber 34 between the ends 30 and 32. The proximal end 30 defines a flared end having a flared inner surface 36 suitable for force fit connection with the distal end 28 of the first chamber 24. The proximal end 30 of the tip 14 has first chamber shoulder 38 which acts as the stop for the connection between the distal end 28 and the tip 14. And, the proximal end 30 of the tip 14 has second chamber first shoulder 40. The distal end 32 has a second chamber second shoulder 41.

A plunger 42 is inserted in the second chamber 34 between the proximal and distal ends 30 and 32, respectively. The plunger 42 has a first end defining a post 43 and a second end defining a post 44 and plunger body 45 between the posts 43 and 44. The plunger body 45 is sized and shaped to move slidably in the second chamber, only. The plunger body 45 is enlarged to a sufficient size such that it can not escape either the proximal or distal ends 30 and 32, respectively. The second chamber first and second shoulders 40 and 41 prevent movement out of the second chamber 34.

The tip 14 includes a spring device comprising a spring 46 in the exemplary embodiment shown in Fig. 3. The spring is wrapped around the first post 43 between the plunger body 45 and the second chamber first shoulder 40. The spring 46 is of sufficient strength and tension that it normally urges the plunger 42 to a first, normal position, closing the distal end 32 of the tip 14 and leaving open the proximal end 30 of the tip 14.

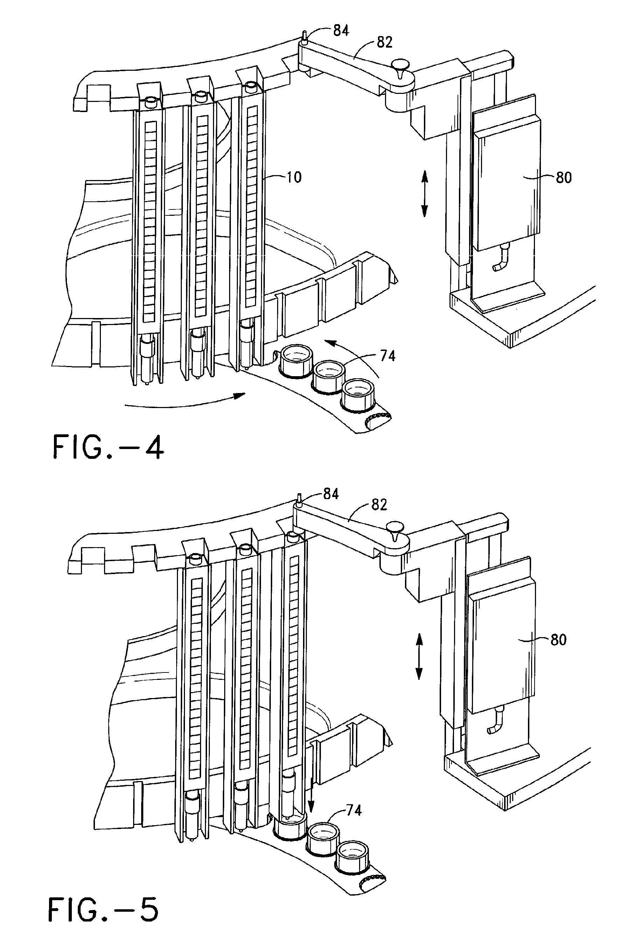

In the normal position, the plunger body 45, abuts against the second chamber second shoulder 41. Additionally, in the normal position, the second post 44 extends beyond the distal end 32 of the tip 14. The extension is sufficient distance so that when the spring 46 is depressed the plunger 42 moves to a second position allowing communication between the open tip 14 and the first and second chambers, 24 and 34, respectively as will be appreciated from the description with respect to Figs. 4 - 11.

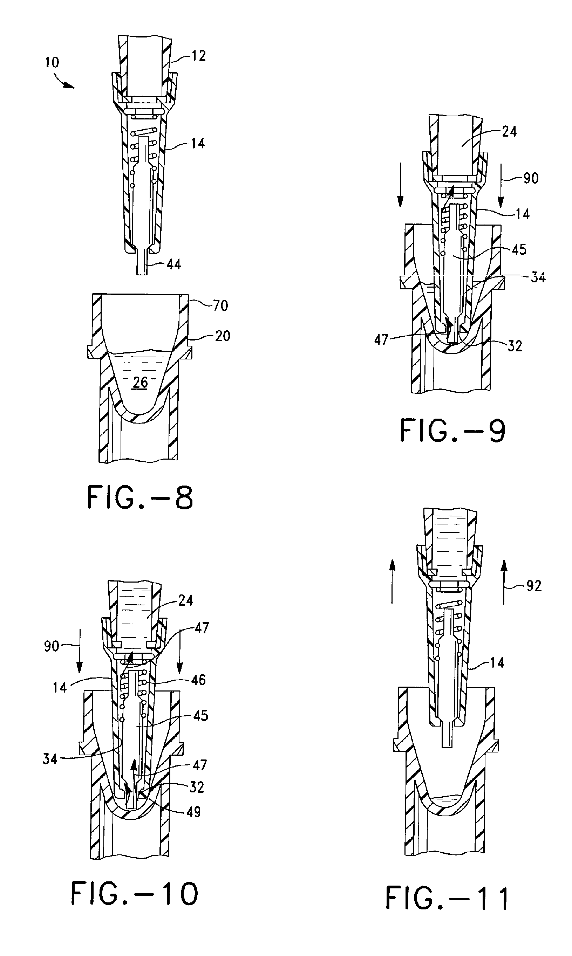

As best shown with respect to Figs. 9 and 10, the plunger 42 achieves a second position when depressed. In the normal position as illustrated in Fig. 3, the first and second chambers 24 and 34, respectively communicate freely with one another. In other words, there exists an unimpeded opening between the first and second chambers, 24 and 34, respectively such that fluid freely flows between them. In the second plunger position, the spring 46 is depressed, compressing the spring and opening the distal end 32 of the tip 14. However, even if the spring 46 is fully compressed an opening exists between the first and second chambers, 24 and 34, respectively. Thus, fluid flows as indicated by the direction of arrows, namely, into the second chamber 34. When a vacuum or other sucking force is applied to the pipette 10, fluid travels through the distal end 32 through the second chamber 34 and into the first chamber 24 as indicated by the arrows 47 of Figs. 9 and 10.

In the exemplary embodiment shown in the drawing and particularly with reference to Figs. 3, 9 and 10, the plunger 42 has first and second abutment surfaces 48 and 49, respectively. And, abutment surface 49 is tapered. Additionally, the second chamber second shoulder 41 is similarly tapered to facilitate a sealed fit between the plunger 42 and the distal end 32.

As illustrated in Figs. 4 - 7, the pipette 10 is lowered into the sample tube 20 for aspiration of the sample into the pipette 10. The sample tube 20 has a proximal end 70 (Fig. 8) and a distal end 72 (Fig. 1). As best seen in Fig. 8, the proximal end 70 defines an end zone comprising a sample cup 74. The sample cup 74 contains liquid sample 76 and in the exemplary embodiment blood serum.

The diagnostic instrument 50 includes a lowering mechanism and in the exemplary embodiment the lowering mechanism comprises an elevator 80 having an arm 82. The elevator 80 includes a vertically driven motor (not shown) which lowers and raises the pipette 10.

The diagnostic instrument 50 additionally includes a liquid pump (not shown) having tubing (not shown) running from the liquid pump through the elevator 80 and to the elevator arm 82. The elevator arm 82 has a distal end 84 having a connection structure for connecting proximal end of the pipette 10 for creating a vacuum or other sucking force for aspirating liquid from the sample cup 74 to the pipette 10.

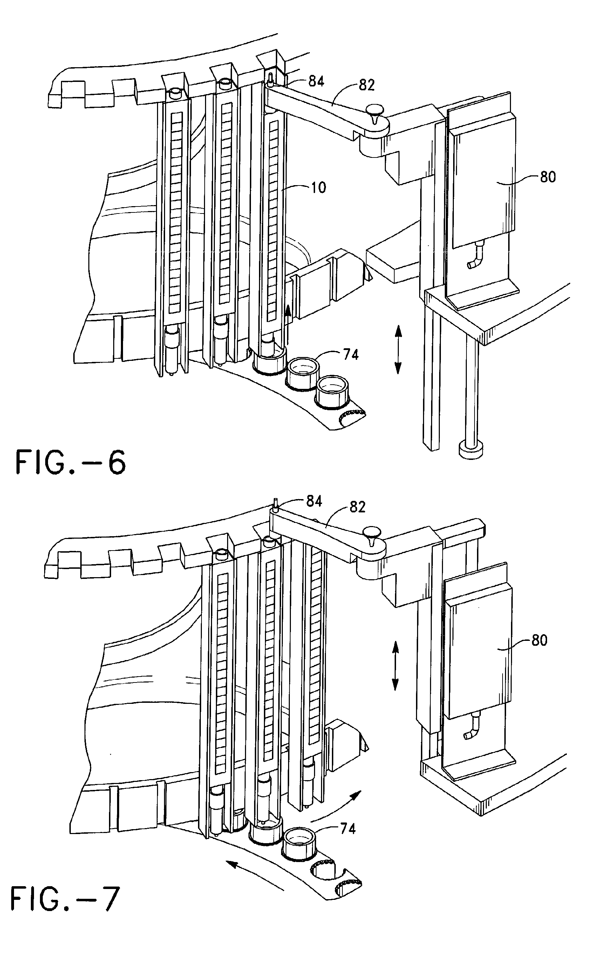

As shown in Fig. 6, at the appropriate time, determined by other automated structure within the diagnostic instrument 50, the arm 82 attaches to the proximal end of the pipette 10 and lowers the pipette tip 14 into the sample cup 74. As will be explained in greater detail with reference to Figs. 8 - 11, upon being lowered into the sample tube, the tip 14 opens the bottom of the pipette 10 and the liquid pump (not shown) connected to the pipette 10 is activated to draw liquid sample directly from the sample tube 20 into the pipette 10.

Since the pipette 10 is not round, nor is it typically found to be round in the art, and since it is lockably slid into the slot on the second carousel 54, there is not likely to be any rotation of the pipette 10. Therefore, a similar bar code reader 50 readily reads the identifying indicia on the outer surface of the pipette 10. Once the matching sample tube 20 and pipette 10 have been located, they are aligned and the pipette tip 14 lowered into the sample cup 74 as described in more detail with reference to Figs. 8-11.

With particular reference to Figs 4 - 7, there is shown the procedure and apparatus for aspirating the sample from the sample tube 20 directly into the pipette 10. Initially, sample is taken from a patient in the form of whole blood. The blood is put through a series of steps to extract the serum. The serum is loaded into the sample tube 20 and placed on the first carousel 54, also known as the sample carousel. Each sample tube 20 has an outer surface with unique identifying indicia as set forth above. And that identifying indicia is in machine readable format, such as by the bar code reader 50, also as set forth above.

Similarly, the pipette 10 has an outer surface and includes unique identifying indicia corresponding with the unique identifying indicia of the sample tube 20. Similarly, the unique identifying indicia is in machine readable format, such as by the bar code reader 50. The pipette 10 is loaded into the second carousel 54 also know as the diagnosis carousel.

The first and second carousels, 12 and 14, respectively are rotated in the direction shown by the arrows until the sample tube 20 aligns with the matching pipette 10 as shown in Fig. 3. Once aligned, as shown particularly in Fig. 4, the pipette 10 is lowered into its corresponding sample tube 20 for aspiration of the sample directly into the pipette 10.

The pipette 10 is lowered by the rotary elevator 80 (Fig. 6) which, as described above, connects to arm 82 and lowers the pipette 10 into the sample 74. Also, as described above, the pipette tip 14 is depressible and is sized and shaped to contact the bottom of the sample cup 74 depressing the tip and opening one end of the pipette 10 adjacent the tip and in this case defining the bottom of the pipette 10.

In an exemplary embodiment of the pipette 10, the tip 14 defines a one way valve for allowing fluid in, but preventing fluid from leaking through the bottom upon the opening of the bottom adjacent the tip 14.

A liquid pump, not shown, is connected to the top of the pipette 10 as described above and causes liquid sample from the sample cup 74 to aspirated or to be sucked into the pipette 10. Upon an appropriate command the liquid pump is shut off and further fluid flow ceases.

As shown in Fig. 7, after aspiration, the pipette 10 is raised closing the pipette tip 14. The pipette 10 is raised by the rotary elevator 80 to its original position on the diagnosis carousel 54 (Fig. 4). After raising the pipette 10, various reagents are added and washed to obtain the diagnosis of the sample tested. There may be multiple rinsing stages, a waiting or incubation state and the addition of various reagents depending on the diagnosis being conducted. Once all of the steps are completed for diagnosis, typically the pipette is rotated to the photographic station where a picture is taken to show and record the diagnosis results.

As will be appreciated from the drawing and especially Fig. 3, the outer surface of the pipette 10 comprising cover 22 has a series of windows 23. In the immunoassay example of the exemplary embodiment of the invention, each of the windows 26 may represent a different allergen to which the patient may be allergic. Thus, in one testing procedure, a number of different allergens can be tested promoting efficiency and economy. In fact, in the preferred embodiment shown in Fig. 3, there are 36 different windows and up to 36 different allergens or groups of allergens may be tested.

With respect to Figs. 8 - 11, there is shown a close view of the operation of the pipette tip 14. As described above, the pipette tip 14 is lowered into the sample cup 74. Fig. 8 illustrates the cup 74 and the tip 14 being aligned. Fig. 9 illustrates by downward arrows 90, the arm 82 lowering the pipette tip 14 into the sample cup 74.

As seen in Fig. 10, upon being lowered into the sample cup 74, the second post 44 contacts the cup and compresses the spring 46. At that time, the plunger 42 move from its first normal position where the pipette tip 14 is closed to a second position where the pipette tip 14 is opened. The liquid pump is then activated automatically and liquid sample in the form of serum in the exemplary embodiment flows in the direction of arrow 47 into the second chamber of the pipette10. As discussed above and as clearly seen in Figs. 9 and 10, serum then flows from the second chamber 34 to the first chamber 24.

As seen with respect to Fig. 11, upon the appropriate signal, when sufficient serum has been extracted for analysis, the liquid pump is deactivated and the arm 82 raises the pipette 10 as shown by the arrows 92 to its normal position on the second carousel 54. The next sample cup 74 and pipette 10 can then be aligned for continuation of the automated diagnosis process.

While the foregoing detailed description has described several embodiments of the pipette structure in accordance with this invention, it is to be understood that the above description is illustrative only and not limiting of the disclosed invention. Particularly, various plunger assemblies and structure may be employed to provide the necessary means for aspirating the sample directly into the pipette. Additionally, while the pipette herein has been shown in use in an immunoassay environment, it will be appreciated that the use of the pipette in accordance with this invention is not so limited. Additionally, while a specific number of windows on the outside surface of the pipette has been set forth that specific number or numbers are unnecessary as are the windows themselves to the overall inventive nature of the pipette in accordance with this invention. Thus, the invention is to be limited only by the claims as set forth below.

## Claims

1. A diagnostic pipette assembly including aspiration structure for automation, comprising:
a main pipette housing having a hollow interior defining a first chamber and a proximal end and an open distal end;
a pipette tip assembly connectable to the main pipette housing having a hollow interior defining a second chamber, the pipette tip hollow interior having open proximal and distal ends and the first and second chambers in fluid communication and the pipette tip including:
a plunger within the second chamber; and
structure for normally urging the plunger to a first position wherein the plunger closes the distal end of the pipette tip and allowing for the plunger to be urged to a second position wherein the plunger opens the distal end and allows fluid communication from the distal end of the pipette tip through the second chamber and into the first chamber.

2. The diagnostic pipette assembly as set forth in Claim 1, wherein the structure for normally urging the plunger to a first position comprises a one-way valve which is normally urged closed preventing fluid communication between the pipette tip distal end and the first and second chambers and being urgable to a second position allowing for such communication.

3. The diagnostic pipette assembly as set forth in Claim 1, wherein the structure for normally urging the plunger to a first position includes spring structure in the second chamber.

4. The diagnostic pipette assembly as set forth in Claim 1, wherein the plunger includes a first post and a second post and an enlarged plunger body between the posts, the plunger body is sized and shaped to close off the distal end of the pipette tip.

5. The diagnostic pipette assembly as set forth in Claim 4, wherein the structure for normally urging the plunger to a first position includes a spring mounted on the first post and the spring normally urges the plunger body against the pipette tip distal end.

6. The diagnostic pipette assembly as set forth in Claim 5, wherein the plunger body has an abutment surface contacting the distal end of the second chamber, the second chamber has a matching abutment surface and wherein both abutment surfaces are tapered.

7. The diagnostic pipette assembly as set forth in Claim 1, wherein the plunger includes a second post extending beyond the distal end of the pipette tip, the second post be depressable and upon depression the spring is compressed opening the distal end of the pipette tip.

8. The diagnostic pipette assembly as set forth in Claim 1, wherein the main pipette housing is connected to the pipette tip at the distal end of the first chamber and the proximal end of the second chamber and wherein the first post is adjacent the connection of the first and second chambers and the structure for normally urging the plunger to a first position is connected to the first post.

9. The diagnostic pipette assembly as set forth in Claim 1, wherein the main pipette housing is connected to the pipette tip at the distal end of the first chamber and the proximal end of the second chamber and wherein the pipette distal end of the housing is tapered and wherein the proximal end of the pipette tip is compatible tapered so that a fluid tight force fit seal is achieved.

10. The diagnostic pipette assembly as set forth in Claim 5, wherein the plunger body has an abutment surface contacting the distal end of the second chamber, the second chamber has a matching abutment surface and wherein both abutment surfaces are tapered.

11. The diagnostic pipette assembly as set forth in Claim 1, wherein the main pipette housing is force fit into the pipette tip at the distal end of the first chamber and the proximal end of the second chamber for providing a fluid tight force fit seal.

12. The diagnostic pipette assembly as set forth in Claim 11, wherein the main pipette housing and the pipette tip have mating abutment surfaces for providing for the force fit and wherein the abutment surfaces are matingly tapered to provide a fluid tight force fit seal.

13. A diagnostic pipette assembly including aspiration structure for automation, comprising:
a main pipette housing having a hollow interior and having open first and second ends communicating through the hollow interior, and an exterior surface, each of the ends being open, the exterior surface having at least one window for viewing diagnostic results; and
a pipette tip assembly connectable to the main pipette housing at the second open end, the pipette tip assembly including a housing, the pipette tip housing having a hollow interior and a first end proximate to the main pipette housing at the second open end, the pipette tip housing ends communicating with one another through the hollow interior, the interior of the tip body in communication with the interior of the main pipette housing, the pipette tip assembly including structure within the tip housing interior for closing and opening the first and second ends of the tip housing, the structure having a normal first position wherein the first end of the pipette tip housing being open and the second end of the pipette tip housing being closed and capable of responding to pressure at the second end of the pipette tip housing by moving to a second position wherein the first end of the pipette tip housing is remains open and the second end of the pipette tip housing is open, wherein there is fluid communication from the second end of the pipette tip through the pipette tip interior and the main pipette housing interior.
whereby, the second end of the pipette tip is normally closed, but upon the application of pressure, the second end of the pipette tip opens while closing the first end and sample is capable of being aspirated into the housing when the pipette tip responds to the pressure at the second end of pipette tip.

14. The diagnostic pipette assembly as set forth in Claim 13, wherein the pipette tip assembly structure includes:
a plunger sized and shaped to open and close the second pipette tip opening and also to keep open the second end of the main pipette housing, the plunger including a first and a second post and a plunger body between the posts, the plunger body being of suitable size and shape to perform the closing and opening of the respective ends in the pipette tip and main pipette housing,
a spring within the tip housing having an interior compatibly engaging one of the plunger posts and normally urging the plunger to a first position wherein the first pipette tip end is open and the second end is closed and the second end pipette tip end yielding to pressure to move the plunger body to a second position wherein the second pipette tip end is open, allowing sample to be aspirated within the housing interior.

15. The diagnostic pipette assembly as set forth in Claim 13, wherein the pipette tip assembly body structure includes a plunger assembly, the plunger assembly includes the plunger having a first end which compatibly and slideably engages the second pipette tip end, a plunger body sized and shaped to fit snugly and matingly against each of the second end of the pipette tip for closing the second end at the appropriate time, the plunger assembly being normally in a first position wherein the plunger normally urges the second pipette tip end closed and the first pipette tip end and second main pipette housing ends are open and responding to pressure to define a second position wherein the first pipette end and second main pipette housing end are remain open while the second end is open and the pipette tip assembly is capable of automatically aspirating sample into the pipette housing, the plunger assembly, thereby defining a one way valve.

16. The diagnostic pipette assembly as set forth in Claim 13, wherein the exterior housing surface has a series of windows allowing for simultaneously viewing a series of diagnostic results.

17. The diagnostic pipette assembly as set forth in Claim 13, wherein the exterior housing surface has a plurality of windows allowing for simultaneously viewing of a plurality of diagnostic results.

18. A method of using a diagnostic pipette assembly for aspirating sample from a sample tube to the diagnostic pipette assembly, the steps of which comprise:
providing a diagnostic pipette assembly comprising: a main pipette housing having a hollow interior defining a first chamber and a proximal end and an open distal end; a pipette tip assembly connectable to the main pipette housing having a hollow interior defining a second chamber, the pipette tip hollow interior having open proximal and distal ends and the first and second chambers in fluid communication and the pipette tip including means for normally be closed and opened upon pressure;
lowering the pipette tip into a sample tube until the pressure caused from contacting the sample tube causes the pipette tip to open;
aspirating sample from the sample tube to the diagnostic pipette assembly; and
raising the diagnostic pipette assembly and closing the pipette tip.

19. The method of using a diagnostic pipette assembly for aspirating sample as set forth in Claim 18, wherein the steps include:
after the raising of the pipette assembly, performing a multiple simultaneous testing of the sample.

20. The method of using a diagnostic pipette assembly for aspirating sample as set forth in Claim 19, wherein the steps include:
lowering and raising the pipette by automated means.
